# EUROPÄISCHE PATENTSCHRIFT

(11) **EP 2 902 223 B1**
(45) Veröffentlichungstag und Bekanntmachung des Hinweises auf die Patenterteilung: **20.03.2019**
(21) Anmeldenummer: 15000054.5
(22) Anmeldetag: 13.01.2015
(51) Int. Cl.: B60G 17/0195, B60G 17/016, B60G 17/052, B60W 10/184, B60W 10/22, B60W 30/02

(54) **Verfahren zur Niveauregelung eines Fahrzeugs**
Method for level adjustment of a vehicle
Procédé de réglage du niveau d'un véhicule

(30) Priorität: 14.01.2014 DE 102014000492
(43) Veröffentlichungstag der Anmeldung: 05.08.2015
(73) Patentinhaber: WABCO GmbH, 30453 Hannover (DE)
(72) Erfinder: Stender, Axel, 31787 Hameln (DE); Treichel, Thomas, 10247 Berlin (DE); Witte, Norbert, 31867 Lauenau (DE); Wolf, Markus, 31137 Hildesheim (DE)

(56) Entgegenhaltungen:
- EP-A1- 0 530 755
- EP-A2- 1 104 732
- EP-A2- 1 153 773
- WO-A1-2006/029732
- WO-A2-99/06987
- CN-A- 101 439 653
- CN-A- 103 085 628
- CN-U- 203 093 670
- DE-A1- 4 228 893
- DE-A1- 10 038 074
- DE-A1- 19 830 189
- DE-A1-102009 013 647
- GB-A- 741 899
- JP-A- H05 162 566
- JP-A- 2006 240 388
- KR-A- 20110 009 600
- US-A1- 2005 060 082
- US-A1- 2005 228 565
- US-A1- 2010 152 969
- US-A1- 2011 288 716
- US-A1- 2013 041 576

## Beschreibung

Die Erfindung betrifft ein Verfahren zur Niveauregelung eines Fahrzeugs sowie ein Steuergerät für die Durchführung des Verfahrens und ein System zur Niveauregelung eines Fahrzeugs.

Fahrzeuge mit elektronischem Bremssystem können mit allerlei Zusatzfunktionen ausgestattet sein. Bekannt ist eine Stabilitätsregelung, bei der das Fahrzeug unter bestimmten Bedingungen selbsttätig bremst, um das Entstehen einer instabilen Fahrsituation zu vermeiden. Als instabile Fahrsituation werden beispielsweise Drehungen um eine Hochachse oder eine Längsachse des Fahrzeugs angesehen.

Das Fahrzeug kann auch Teil einer Kombination mehrerer, miteinander verbundener Fahrzeuge sein, also Teil eines Gespanns oder eines sogenannten Road Train. Dabei kann auch ein angehängtes, also gezogenes Fahrzeug ein ziehendes Fahrzeug beeinflussen und umgekehrt. Ein angehängtes Fahrzeug kann zugleich ziehendes Fahrzeug für ein weiteres angehängtes Fahrzeug sein, z. B. in einem sogenannten B-Double oder mit einem Dolly.

Auch ohne eine vorgesehene Stabilitätsregelung können in einem Fahrzeug mit geeigneten Sensoren Werte von Parametern erfasst werden, die Rückschlüsse auf die Fahrstabilität ermöglichen. In Fahrzeugen mit elektronischem Bremssystem werden typischerweise die Signale von Raddrehzahlsensoren ständig ausgewertet. Darüber hinaus können ein Querbeschleunigungssensor und weitere Sensoren vorgesehen sein.

Nutzfahrzeuge mit Ladefläche und pneumatischer Federung sind vorzugsweise mit einer Niveauregelung ausgestattet. Möglich ist die Veränderung der Höhe der Ladefläche durch gezielte Ansteuerung der pneumatischen Federung. Die Ansteuerung kann elektronisch erfolgen. Vorzugsweise wird die pneumatische Federung mit Druckluft aus einer pneumatischen Bremsanlage versorgt.

Die elektronische Steuerung zur Niveauregelung kann mit der Steuerung des elektronischen Bremssystems verknüpft sein, entweder im selben Steuergerät oder durch Austausch elektronischer Nachrichten zwischen elektronischen Steuergeräten des Bremssystems einerseits und der pneumatischen Federung andererseits.

Das elektronische Bremssystem kommuniziert mit anderen elektronischen Bestandteilen des Fahrzeugs über eine spezielle Datenverbindung, nämlich über das CAN-Bussystem. In diesem weisen elektronische Nachrichten ein standardisiertes Format auf, so dass die Geräte unterschiedlicher Hersteller miteinander kommunizieren können.

Innerhalb der europäischen Gemeinschaft muss ein Fahrzeug mit Stabilitätsregelung im CAN-Bussystem die Information zur Verfügung stellen, ob die Stabilitätsregelung gerade aktiv ist, d. h., ob gerade Maßnahmen zur Erhaltung oder Verbesserung der Stabilität durchgeführt werden. In der Regel handelt es sich dabei um Bremseingriffe. Der Status der Stabilitätsregelung ergibt sich aus dem Inhalt der Botschaft "VDC Active". Sobald die Stabilitätsregelung aktiv ist, wird der Status der Botschaft "VDC Active = 1" gesetzt und eine entsprechende CAN-Botschaft übermittelt. Vorzugsweise handelt es sich um wenigstens eine der CAN-Botschaften EBS 11 oder EBS 21.

Die Schriften US 2010/0152969 A1, WO 99/06987 A2, DE 100 38 074 A1, US 2011/0288716A1, GB 741 899 A und EP 1 104 732 A2 offenbaren ein Verfahren zur Niveauregelung eines Fahrzeuges, wobei die Niveauregelung aktiviert werden kann um Treibstoff zu sparen.

CN 203093670 U, CN 103085628 A und KR 2011 0009600 A offenbaren Verfahren zur Niveauregelung eines Fahrzeugs, wobei das Niveau während der Fahrt abgesenkt wird wenn die Fahrzeuggeschwindigkeit ein Grenzwert überschreitet.

WO 2006/029732 A1 offenbart ein Verfahren zur Niveauregelung eines Fahrzeugs, wobei eine unterschiedliche Bauhöhe von Fahrerhaus und Auflieger ebenfalls den Luftwiderstand des Sattelzugs beeinträchtigt. Es ist deshalb vorteilhaft, wenn die Sattelkupplung nicht nur horizontal verschiebbar ist, sondern auch abgesenkt bzw. angehoben werden kann. Der Auflieger kann je nach Bauweise während der Fahrt so weit abgesenkt werden, dass er hinter dem Fahrerhaus verschwindet, so dass der Luftwiderstand im Wesentlichen durch das Zugfahrzeug bestimmt wird.

US 2013/041576 A1 offenbart ein Verfahren und System zur Stabilitätsregelung eines Fahrzeugs. Das Fahrzeug kann auch ein aerodynamisches Design enthalten, das für den Zweck der Fahrzeugkonvoi optimiert ist. Dies kann das Design des Traktors oder Anhängers sein, oder das Design von zusätzlichen aerodynamischen Hilfsmitteln, die den Luftstrom für den Konvoi-Modus optimieren. Diese Konstruktion kann einer bestimmten Geschwindigkeit entsprechen, bei der die Luftströmung für den Konvoi-Modus optimiert wird. Ein solches Verfahren und System ermöglicht es Fahrzeugen, auf bequeme und sichere Weise dicht hinter einander zu folgen. In diesem Fall, kann das System die Geschwindigkeit des Führungsfahrzeugs zu begrenzen, um die Fahrzeuge des Konvois näher zusammen zu bringen.

Aufgabe der vorliegenden Erfindung ist die Schaffung eines Verfahrens zur Verbesserung der Stabilitätsregelung oder zur Verbesserung der Stabilität, bevor eine gegebenenfalls vorhandene Stabilitätsregelung des Fahrzeugs eingreift.

Zur Lösung der Aufgabe weist das erfindungsgemäße Verfahren die Merkmale des Anspruchs 1 auf. Das Niveau des Fahrzeugs wird während der Fahrt abgesenkt, sobald wenigstens eine der nachfolgenden Bedingungen a), b) erfüllt ist:
a) wenigstens eine Stabilitätsregelung des Fahrzeugs, eines ziehenden Fahrzeugs oder eines angehängten Fahrzeugs ist aktiv,
b) wenigstens im Fahrzeug, in einem ziehenden Fahrzeug oder in einem angehängten Fahrzeug werden durch Sensoren Werte von Parametern erfasst, die Rückschlüsse auf die Fahrstabilität ermöglichen, wobei wenigstens ein erfasster Wert oder wenigstens ein aus erfassten Werten berechneter Wert einen Grenzwert überschreitet.

Ergänzend ist vorgesehen, dass das Fahrzeugniveau anschließend wieder angehoben werden kann, sobald die zum Absenken des Niveaus erfüllte Bedingung nicht mehr gegeben ist. Zur Reduzierung des Energieverbrauchs sollte eine ausreichende Hysterese vorgesehen sein. Dies gilt insbesondere in Verbindung mit einer Niveauregelung als Teil einer pneumatischen Federung.

Im einfachsten Fall bezieht sich die Regelung auf nur ein Fahrzeug, welches nicht mit anderen Fahrzeugen verbunden ist. Ein ziehendes oder ein angehängtes Fahrzeug sind dann nicht vorhanden. Alternativ kann das Fahrzeug an ein ziehendes Fahrzeug angehängt sein oder selbst ein angehängtes Fahrzeug ziehen. Schließlich kann das Fahrzeug mit einem ziehenden Fahrzeug und einem angehängten (gezogenen) Fahrzeug verbunden sein.

Bei mehreren miteinander verbundenen Fahrzeugen, etwa einer Sattelzugmaschine mit Auflieger oder einem anderen Gespann aus zwei Fahrzeugen oder einem sogenannten Road Train mit mehreren Fahrzeugen, ist erfindungsgemäß das Fahrzeug, dessen Niveau geregelt wird, ein anderes als das Fahrzeug für das wenigstens eine der Bedingungen a), b) erfüllt sein soll. Bei dem Fahrzeug, für das eine Bedingung erfüllt sein soll, kann es sich um das geregelte Fahrzeug, um ein ziehendes oder ein angehängtes Fahrzeug handeln. Als ziehendes Fahrzeug gilt in diesem Fall jedes voranfahrende Fahrzeug, auch ohne eigenen Antrieb, vorzugsweise aber mit eigenem Antrieb.

Nach einem weiteren Gedanken der Erfindung ist vorgesehen, dass das Fahrzeug mit Stabilitätsregelung ein Signal zur Erkennung der aktiven Stabilitätsregelung ausgibt, und dass das Fahrzeug mit Niveauregelung das Signal auswertet und bei aktiver Stabilitätsregelung das Niveau absenkt. Auch hier kann das Verfahren auf ein einzelnes Fahrzeug angewendet werden oder auf miteinander verbundene Fahrzeuge. Demnach kann das Fahrzeug mit Stabilitätsregelung dasselbe sein wie das Fahrzeug mit Niveauregelung. Alternativ handelt es sich um verschiedene Fahrzeuge, die aber miteinander verbunden sind, etwa als Zugmaschine und Anhängefahrzeug oder im Rahmen eines Road Train mit mehreren Zugmaschinen und/oder Anhängefahrzeugen.

Erfindungsgemäß kann es sich bei dem Signal zur Erkennung der aktiven Stabilitätsregelung um eine CAN-Botschaft handeln, insbesondere um den Status der Funktion "VDC Active". Sofern die Funktion den Status "1" hat, ist die Stabilitätsregelung aktiv. Beim Status "0" ist die Stabilitätsregelung passiv.

Vorteilhafterweise wird in wenigstens einem Fahrzeug ein Wert für die Querbeschleunigung erfasst. Dieser Wert oder ein daraus abgeleiteter Wert wird mit einem Grenzwert verglichen. Bei Überschreitung des Grenzwerts ist eine der Bedingungen zum Auslösen der Niveauregelung erfüllt.

Erfindungsgemäß werden in wenigstens einem Fahrzeug Werte von Raddrehzahlsensoren erfasst. Wenigstens einer der Werte oder ein aus den Werten abgeleiteter Wert wird mit einem Grenzwert verglichen. Beispielsweise kann sich aus den Werten der Raddrehzahlsensoren ergeben, dass an mindestens einer Achse starker Schlupf besteht, der zu einer instabilen Fahrsituation führen kann.

Erfindungsgemäß kann in wenigstens einem Fahrzeug ein Wert für wenigstens eine Achslast erfasst werden. Dieser Wert oder ein daraus abgeleiteter Wert wird mit einem Grenzwert verglichen. In Kombination mit weiteren Werten kann sich ein Hinweis auf eine instabile Fahrsituation ergeben. Auch kann vorgesehen sein, dass das Fahrzeug ab einer bestimmten Achslast stets abgesenkt wird.

Über die Niveauregelung kann die Höhe des Fahrzeugs nur in Grenzen zwischen einem Minimum und einem Maximum verändert werden. In normalen Fahrsituationen sollte über die Niveauregelung eine mittlere Höhe eingestellt sein, zumindest mit Abstand zum Minimum. Vorteilhafterweise wird das Niveau des Fahrzeugs nur um einen Teilbetrag der möglichen Absenkung abgesenkt, also nicht bis zum Minimum. Das Minimum wird in Fahrzeugen mit pneumatischer Federung durch die Auflage auf Puffern definiert. Im Extremfall kann durch die erfindungsgemäße Niveauregelung auch eine Absenkung bis auf die Puffer vorgesehen sein.

Im einfachsten Fall erfolgt die Niveauregulierung für das Fahrzeug insgesamt. Möglich ist aber auch eine differenzierte Niveauregelung, bei der ein vorderer Teil des Fahrzeugs auf eine andere Höhe abgesenkt wird als ein hinterer Teil des Fahrzeugs. Realisierbar ist dies beispielsweise durch voneinander getrennte pneumatische Federbälge an Vorderachse und Hinterachse bzw. von Achse zu Achse. Auch kann vorgesehen sein, dass in diesem Zusammenhang die Niveauregelung in Abhängigkeit von der Achslast durchgeführt wird. Eine Achse mit höherer Achslast wird stärker abgesenkt als eine Achse mit demgegenüber geringerer Achslast.

Nach einem weiteren Gedanken der Erfindung wird bei der Niveauregelung nach Seiten differenziert. Eine Seite des Fahrzeugs wird stärker abgesenkt als die andere Seite. Insbesondere die kurveninnere Seite des Fahrzeugs wird stärker abgesenkt als die kurvenäußere Seite. Die Absenkung der kurveninneren Seite bzw. der Unterschied zur kurvenäußeren Seite ist beispielsweise abhängig von der aktuellen Querbeschleunigung des Fahrzeugs.

Ein erfindungsgemäßes Steuergerät für die Durchführung des Verfahrens weist die Merkmale des Anspruchs 10 auf. Das Steuergerät ist für die Niveauregelung des Fahrzeugs vorgesehen. Die Software des Steuergerätes ist wenigstens
a) zur Verarbeitung eines Signals einer Stabilitätsregelung vorgesehen oder
b) zum Vergleich von Grenzwerten mit Sensorwerten oder
c) zum Vergleich von Grenzwerten mit aus Sensorwerten abgeleiteten Werten.

Das Steuergerät kann zugleich Steuergerät eines elektronischen Bremssystems oder einer pneumatischen Federung oder von beidem sein. Das Steuergerät erhält die erforderlichen Daten von angeschlossenen Sensoren und/oder über ein angeschlossenes CAN-Bussystem. Über das Bussystem kann das Steuergerät auch Daten aus mit dem Fahrzeug verbundenen weiteren Fahrzeugen erhalten oder an diese übersenden.

Das Steuergerät regelt in Verbindung mit einer pneumatischen Federung die Druckluftzufuhr in die Federbälge und kann so das Fahrzeugniveau absenken oder anheben.

Schließlich ist Gegenstand der Erfindung auch ein System zur Niveauregelung des Fahrzeugs, mit den Merkmalen des Anspruchs 11. Bestandteile des Systems sind ein elektronisches Steuergerät und Mitteln zum Anheben und Absenken des Niveaus. Das Niveau ist während der Fahrt absenkbar, sobald wenigstens eine der nachfolgenden Bedingungen a), b) erfüllt ist:
a) wenigstens eine Stabilitätsregelung des Fahrzeugs, eines ziehenden Fahrzeugs oder eines angehängten Fahrzeugs ist aktiv,
b) wenigstens im Fahrzeug, in einem ziehenden Fahrzeug oder in einem angehängten Fahrzeug werden durch Sensoren Werte von Parametern erfasst, die Rückschlüsse auf die Fahrstabilität ermöglichen, wobei wenigstens ein erfasster Wert oder wenigstens ein aus erfassten Werten berechneter Wert einen Grenzwert überschreitet.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
Fig. 1 einen Lastzug mit einem sogenannten B-Double,
Fig. 2 einen Lastzug mit einem sogenannten Dolly.

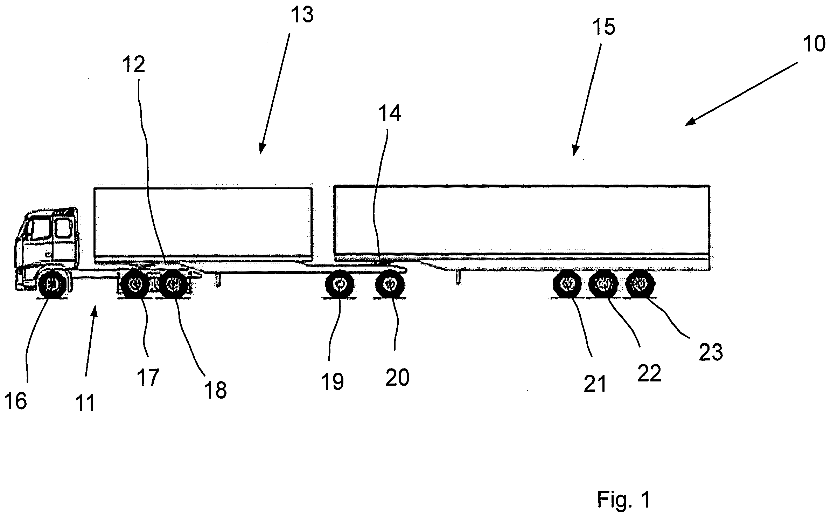

Gemäß Fig. 1 besteht ein Lastzug 10 aus einer Zugmaschine 11 mit Sattelplatte 12, einem ersten Auflieger 13 nach Art eines sogenannten A-Trailers mit einer hinteren Sattelplatte 14, und einem zweiten Auflieger 15, nämlich einem "normalen" Auflieger ohne hinten überstehende Sattelplatte. Die beiden Auflieger 13, 15 bilden zusammen einen B-Double. Das Zugfahrzeug 11 weist drei Achsen 16, 17, 18 auf, davon die beiden hinteren Achsen 17, 18 unterhalb der Sattelplatte 12. Der erste Auflieger 13 weist nur zwei Achsen 19, 20 auf, nämlich unterhalb der Sattelplatte 14, und der zweite Auflieger 15 weist in seinem hinteren Bereich drei Achsen 21, 22, 23 auf.

Zumindest die Zugmaschine 11 ist mit einer Niveauregelung ausgestattet, die mit einem elektronischen Bremssystem verknüpft ist, so dass im elektronischen Steuergerät des Bremssystems implementierte Stabilitätsfunktionen auch die Niveauregelung ansprechen können. Die beiden Auflieger 13, 15 sind zumindest ebenfalls mit einem elektronischen Bremssystem ausgestattet. Eine Niveauregelung kann, muss aber nicht für die Auflieger 13, 15 vorgesehen sein. Eine Besonderheit des Lastzuges 10 besteht darin, dass eine Absenkung des Niveaus der Zugmaschine 11 zugleich auch den Schwerpunkt des ersten Aufliegers 13 absenkt, da letzterer teilweise über den Achsen 17, 18 der Zugmaschine 11 liegt. Analog gilt dies für den ersten Auflieger 13, sofern letzterer eine Niveauregelung aufweist, da auf den Achsen 19, 20 ein vorderer Teil des zweiten Aufliegers 15 liegt,

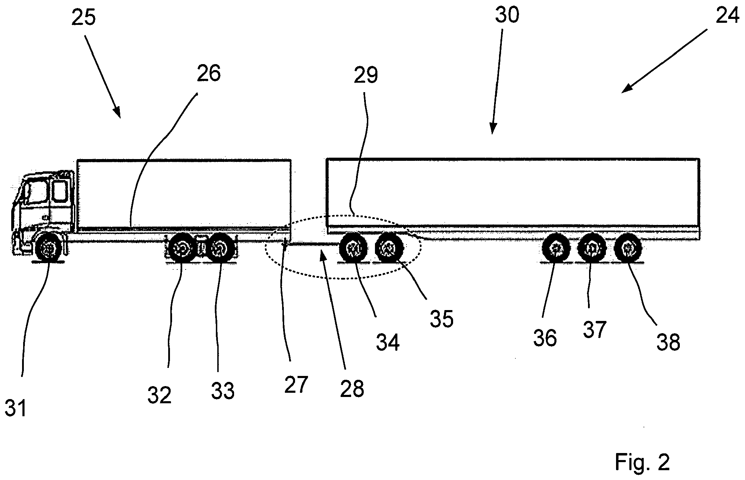

Ein Lastzug 24 gemäß Fig. 2 besteht aus einem Zugfahrzeug 25 mit Ladefläche 26 und Anhängerkupplung 27, einem sogenannten Dolly 28, siehe gestrichelte Ellipse 29, und einem "normalen" Auflieger 30. Das Zugfahrzeug weist hier drei Achsen 31, 32, 33 auf, der Dolly 28 zwei Achsen 34, 35 und der Auflieger 30 drei Achsen 36, 37, 38.

Auch hier ist zumindest das Zugfahrzeug 25 mit einer Niveauregelung ausgestattet, die mit einem elektronischen Steuergerät eines elektronischen Bremssystems verknüpft ist. Eine Niveauregelung des Zugfahrzeugs 25 wirkt sich auf den Auflieger 30 nicht aus. Sofern aber der Dolly 28 mit Niveauregelung und verknüpftem elektronischem Bremssystem ausgestattet ist, kann der Dolly 28 gezielt abgesenkt werden, um den Schwerpunkt des Aufliegers 30 abzusenken.

Je nach Konfiguration eines Lastzugs und je nach Ausstattung der beteiligten Komponenten (Zugmaschine, Anhängefahrzeuge) können die Komponenten allein für sich agieren oder andere Komponenten beeinflussen. Einige der Möglichkeiten werden nachfolgend dargestellt:
A.1 In einem Gespann wenigstens aus ziehendem Fahrzeug (Zugmaschine) und gezogenem Fahrzeug (Anhängefahrzeug) ist wenigstens eines der Fahrzeuge mit einer Niveauregelung ausgestattet. Das Niveau eines Fahrzeugs mit Niveauregelung wird abgesenkt, sobald für dieses Fahrzeug eine Stabilitätsregelung aktiv ist.
A.2 In einem Gespann wenigstens aus ziehendem Fahrzeug (Zugmaschine) und gezogenem Fahrzeug (Anhängefahrzeug) ist wenigstens eines der Fahrzeuge mit einer Niveauregelung ausgestattet. Das Niveau eines Fahrzeugs mit Niveauregelung wird abgesenkt, bevor für dieses Fahrzeug eine Stabilitätsregelung aktiv wird. Hierzu werden Signale von Sensoren ausgewertet.
A.3 In einem Gespann wenigstens aus ziehendem Fahrzeug (Zugmaschine) und gezogenem Fahrzeug (Anhängefahrzeug) ist wenigstens eines der Fahrzeuge mit einer Niveauregelung ausgestattet. Das Niveau eines Fahrzeugs mit Niveauregelung wird abgesenkt, sobald für ein anderes Fahrzeug aus dem Gespann eine Stabilitätsregelung aktiv ist. Zugfahrzeug und Anhängefahrzeuge können über ein CAN-Bussystem oder eine andere Datenverbindung Informationen austauschen.
A.4 In einem Gespann wenigstens aus ziehendem Fahrzeug (Zugmaschine) und gezogenem Fahrzeug (Anhängefahrzeug) ist wenigstens eines der Fahrzeuge mit einer Niveauregelung ausgestattet. Das Niveau eines Fahrzeugs mit Niveauregelung wird abgesenkt, bevor für ein anderes Fahrzeug aus dem Gespann eine Stabilitätsregelung aktiv wird. Hierzu werden Signale von Sensoren ausgewertet. Zugfahrzeug und Anhängefahrzeuge können über ein CAN-Bussystem oder eine andere Datenverbindung Informationen austauschen.
B.1 Ein Zugfahrzeug bzw. ein ziehendes Fahrzeug (kann auch ein Trailer mit weiterem angehängten Trailer sein) eines Gespanns oder in einem Road Train reduziert seine eigene Höhe durch die Niveauregelung, um so die Schwerpunkthöhe des gezogenen Fahrzeugs zu reduzieren. Eine Zugmaschine oder ein vorderer Teil eines B-Double senken beispielsweise ihr Niveau, um das Niveau eines gezogenen Sattelaufliegers zu verringern. Ausgewertet werden die über das CAN-Bussystem übermittelten Daten des gezogenen Fahrzeugs (z.B. Fahrzeugtyp, Achslasten, geometrische Daten, Geschwindigkeiten, Querbeschleunigungen) und/oder die Daten eigener Sensoren des ziehenden Fahrzeugs. Ziel ist die Reduzierung der Schwerpunkthöhe, bevor eine Stabilitätsregelung eingreift.

Ein elektronisches Steuergerät im Anhängefahrzeug generiert beispielsweise eine CAN-Nachricht mit der ermittelten Querbeschleunigung. Die Information ist für das ziehende Fahrzeug verfügbar über die CAN-Nachricht EBS 21 Byte 8. Zusätzlich können Fahrzeugtyp und Achslastsumme (EBS 22 Bytes 5 bis 6), Fahrzeugtyp (EBS 22 Byte 3 Bits 5 bis 6) und/oder Status der Funktion RGE 21/22 des Anhängefahrzeugs ausgewertet werden.

Sofern das Anhängefahrzeug mit einer elektronisch geregelten Luftfederung ausgestattet ist, können zusätzlich mit der CAN-Nachricht RGE 11 oder auf andere Weise vom ziehenden Fahrzeug Anforderungen zur Änderung des Fahrzeugniveaus an das Anhängefahrzeug geschickt werden.

B.2 Ein Zugfahrzeug bzw. ziehendes Fahrzeug eines Gespanns oder in einem Road Train reduziert seine Höhe sobald ein Anhängefahrzeug den Status "1" der Funktion "VDC Active" übersendet. Die Information steckt in der CAN-Nachricht EBS 21 Byte 2 Bits 1 bis 2. Zusätzlich können beispielsweise Fahrzeugtyp und Achslastsumme (EBS 22 Bytes 5 bis 6), Fahrzeugtyp (EBS 22 Byte 3 Bits 5 bis 6) Status der Funktion RGE 21/22, geometrische Daten, Geschwindigkeiten und/oder Querbeschleunigungen des Anhängefahrzeugs ausgewertet werden.

Sofern das Anhängefahrzeug mit einer elektronisch geregelten Luftfederung ausgestattet ist, können mit der CAN-Nachricht RGE 11 oder auf andere Weise vom ziehenden Fahrzeug Anforderungen zur Änderung des Fahrzeugniveaus an das Anhängefahrzeug geschickt werden.

C.1 Ein Anhängefahrzeug in einem Gespann oder Road Train reduziert seine eigene Höhe, bevor eine Stabilitätsregelung eingreift und Zugmaschine oder Anhängefahrzeug bremst. Über die Niveauregelung des Anhängefahrzeugs wird dessen Stabilität verbessert, so dass die vorgesehene Stabilitätsregelung nicht eingreifen muss oder erst später aktiv wird. Ausgewertet werden hierfür Daten des Anhängefahrzeugs, beispielsweise die Parameter Achslast (etwa über einen Balgdruck einer pneumatischen Federung), Gierrate (Drehung um die Hochachse), Querbeschleunigung, Geschwindigkeit usw. Auch können fahrzeugspezifische Parameter herangezogen werden, wie Aufbauart, typische Schwerpunkthöhe, Fahrzeugtyp (Auflieger, Deichselanhänger), usw.

C.2 Ein Anhängefahrzeug in einem Gespann oder Road Train reduziert seine eigene Höhe in Abhängigkeit vom Status der Funktion "VDC Active" des ziehenden Fahrzeugs. Der Status steckt in der CAN-Nachricht EBS 11 Byte 2 Bits 5 bis 6. Bei Status "1" ist eine Stabilitätsregelung des Zugfahrzeugs aktiv. In der Folge wird die Höhe des Anhängefahrzeugs reduziert. Zusätzlich können Fahrzeugtyp und Achslastsumme (EBS 22 Bytes 5 bis 6), Fahrzeugtyp (EBS 22 Byte 3 Bits 5 bis 6) und/oder Status der Funktion RGE 21/22 des Anhängefahrzeugs ausgewertet werden.

Sollte das Anhängefahrzeug weitere Fahrzeuge ziehen, ist eine Niveauansteuerung des weiteren gezogenen Fahrzeugs möglich, z.B. über die CAN-Nachricht RGE 11. Auch kann eine Auswertung der CAN-Daten des weiteren gezogenen Fahrzeugs erfolgen, z.B. von Fahrzeugtyp, geometrischen Daten, Geschwindigkeiten, Querbeschleunigungen.

Mit der erfindungsgemäßen Niveauregelung ist es auch möglich das Niveau eines Anhängefahrzeugs im Sinne der Erfindung zu regeln, obwohl im Steuergerät des Anhängefahrzeugs die erfindungsgemäße Niveauregelung nicht implementiert ist. Es wird ausgegangen von einem Anhängefahrzeug mit Stabilitätsregelung und verstellbarer Luftfederung. Das Steuergerät des ziehenden Fahrzeugs wertet Daten und/oder Nachrichten des Anhängefahrzeugs aus und übersendet eine CAN-Nachricht an das Steuergerät des Anhängefahrzeugs mit der Anweisung, dass das Niveau des Anhängefahrzeugs durch Eingriff in die Luftfederung abgesenkt wird. Je nach Anwendungsfall kann es deshalb ausreichend sein, wenn nur im Steuergerät des ziehenden Fahrzeugs die erfindungsgemäße Niveauregelung implementiert ist. Im Anhängefahrzeug muss lediglich eine Luftfederung mit der Möglichkeit der Niveauverstellung vorhanden sein.

Hauptanwendungsgebiet der Erfindung sind Fahrzeuge mit elektronischem Bremssystem, pneumatischer Bremsanlage und elektronisch geregelter, pneumatischer Federung. Bevorzugt ist eine Anwendung für Gespanne und Road Trains, bei denen Statusinformationen über ein Datenbussystem zwischen den einzelnen Fahrzeugen ausgetauscht werden.

## Patentansprüche

1. Verfahren zur Niveauregelung eines Fahrzeugs, **dadurch gekennzeichnet, dass** das Niveau während der Fahrt abgesenkt wird, sobald wenigstens eine der nachfolgenden Bedingungen a) und b) erfüllt ist:
a) wenigstens eine Stabilitätsregelung des Fahrzeugs, eines ziehenden Fahrzeugs oder eines angehängten Fahrzeugs ist aktiv,
b) wenigstens im Fahrzeug, in einem ziehenden Fahrzeug oder in einem angehängten Fahrzeug werden durch Sensoren Werte von Parametern erfasst, die Rückschlüsse auf die Fahrstabilität ermöglichen, wobei wenigstens ein erfasster Wert oder wenigstens ein aus erfassten Werten berechneter Wert einen Grenzwert überschreitet.
c) wobei bei mehreren miteinander verbundenen Fahrzeugen, etwa einer Sattelzugmaschine mit Auflieger oder einem anderen Gespann aus zwei Fahrzeugen oder einem sogenannten Road Train mit mehreren Fahrzeugen, das Fahrzeug, dessen Niveau geregelt wird, ein anderes ist, als das Fahrzeug für das wenigstens eine der Bedingungen a), b) erfüllt sein soll.

2. Verfahren nach Anspruch 1, **dadurch gekennzeichnet, dass** das Fahrzeug mit Stabilitätsregelung ein Signal zur Erkennung der aktiven Stabilitätsregelung ausgibt, und dass das Fahrzeug mit Niveauregelung das Signal auswertet und bei aktiver Stabilitätsregelung das Niveau absenkt.

3. Verfahren nach Anspruch 2, **dadurch gekennzeichnet, dass** das Signal zur Erkennung der aktiven Stabilitätsregelung eine CAN-Botschaft ist, insbesondere ein Status der Funktion "VDC Active".

4. Verfahren nach Anspruch 1 oder einem der weiteren Ansprüche, **dadurch gekennzeichnet, dass** in wenigstens einem Fahrzeug ein Wert für die Querbeschleunigung erfasst wird, und dass dieser Wert oder ein daraus abgeleiteter Wert mit einem Grenzwert verglichen werden.

5. Verfahren nach Anspruch 1 oder einem der weiteren Ansprüche, **dadurch gekennzeichnet, dass** in wenigstens einem Fahrzeug Werte von Raddrehzahlsensoren erfasst werden, und dass wenigstens einer der Werte oder wenigstens ein aus den Werten abgeleiteter Wert mit einem Grenzwert verglichen wird.

6. Verfahren nach Anspruch 1 oder einem der weiteren Ansprüche, **dadurch gekennzeichnet, dass** in wenigstens einem Fahrzeug ein Wert für wenigstens eine Achslast erfasst wird, und dass dieser Wert oder ein daraus abgeleiteter Wert mit einem Grenzwert verglichen werden.

7. Verfahren nach Anspruch 1 oder einem der weiteren Ansprüche, **dadurch gekennzeichnet, dass** das Niveau des Fahrzeugs nur um einen Teilbetrag der möglichen Absenkung abgesenkt wird.

8. Verfahren nach Anspruch 1 oder einem der weiteren Ansprüche, **dadurch gekennzeichnet, dass** ein vorderer Teil des Fahrzeugs auf eine andere Höhe abgesenkt wird als ein hinterer Teil des Fahrzeugs.

9. Verfahren nach Anspruch 1 oder einem der weiteren Ansprüche, **dadurch gekennzeichnet, dass** eine Seite des Fahrzeugs stärker abgesenkt wird, als die andere Seite des Fahrzeugs, dass insbesondere eine kurveninnere Seite des Fahrzeugs stärker abgesenkt wird als eine kurvenäußere Seite.

10. Steuergerät für die Durchführung des Verfahrens nach einem der voranstehenden Ansprüche und zur Niveauregelung eines Fahrzeugs, mit einer Software wenigstens
a) zur Verarbeitung eines Signals einer Stabilitätsregelung, oder
b) zum Vergleich von Grenzwerten mit Sensorwerten, oder
c) zum Vergleich von Grenzwerten mit aus Sensorwerten abgeleiteten Werten.

11. System zur Niveauregelung eines Fahrzeugs, mit einem elektronischen Steuergerät und Mitteln zum Anheben und Absenken des Niveaus, **dadurch gekennzeichnet, dass** das Niveau während der Fahrt absenkbar ist, sobald wenigstens eine der nachfolgenden Bedingungen a), b) erfüllt ist:
a) wenigstens eine Stabilitätsregelung des Fahrzeugs, eines ziehenden Fahrzeugs oder eines angehängten Fahrzeugs ist aktiv,
b) wenigstens im Fahrzeug, in einem ziehenden Fahrzeug oder in einem angehängten Fahrzeug werden durch Sensoren Werte von Parametern erfasst, die Rückschlüsse auf die Fahrstabilität ermöglichen, wobei wenigstens ein erfasster Wert oder wenigstens ein aus erfassten Werten berechneter Wert einen Grenzwert überschreitet.
c) und das System so eingerichtet ist, dass bei mehreren miteinander verbundenen Fahrzeugen, etwa einer Sattelzugmaschine mit Auflieger oder einem anderen Gespann aus zwei Fahrzeugen oder einem sogenannten Road Train mit mehreren Fahrzeugen, das Fahrzeug, dessen Niveau geregelt wird, ein anderes ist, als das Fahrzeug für das wenigstens eine der Bedingungen a), b) erfüllt sein soll.

## Claims

1. Method for the level control of a vehicle, **characterized in that** the level is lowered during travel as soon as at least one of the following conditions a) and b) is satisfied:
a) at least one stability control system of the vehicle, of a towing vehicle or of a hitched vehicle is active,
b) values of parameters which permit conclusions about the driving stability are acquired at least in the vehicle, in a towing vehicle or in a hitched vehicle, by means of sensors, wherein at least one acquired value or at least one value which is calculated from acquired values exceeds a limiting value,
c) wherein, when a plurality of vehicles are connected to one another, for example a semi-trailer tractor with a semi-trailer or another vehicle combination composed of two vehicles or what is referred to as a road train with a plurality of vehicles, the vehicle whose level is being controlled is a vehicle other than the vehicle for which at least one of the conditions a), b) is to be satisfied.

2. Method according to Claim 1, **characterized in that** the vehicle with stability control outputs a signal for the detection of the active stability control, and **in that** the vehicle with level control evaluates the signal and lowers the level when the stability control is active.

3. Method according to Claim 2, **characterized in that** the signal for detecting the active stability control is a CAN message, in particular a status of the "VDC Active" function.

4. Method according to Claim 1 or one of the further claims, **characterized in that** in at least one vehicle a value for the transverse acceleration is acquired, and **in that** this value or a value derived therefrom is compared with a limiting value.

5. Method according to Claim 1 or one of the further claims, **characterized in that** in at least one vehicle values of wheel rotational speed sensors are acquired, and **in that** at least one of the values or at least one value derived from the values is compared with a limiting value.

6. Method according to Claim 1 or one of the further claims, **characterized in that** in at least one vehicle a value for at least one axial load is acquired, and **in that** this value or a value derived therefrom is compared with a limiting value.

7. Method according to Claim 1 or one of the further claims, **characterized in that** the level of the vehicle is lowered only by a partial amount of the possible lowering.

8. Method according to Claim 1 or one of the further claims, **characterized in that** a front part of the vehicle is lowered to a different level than a rear part of the vehicle.

9. Method according to Claim 1 or one of the further claims, **characterized in that** one side of the vehicle is lowered to a greater extent than the other side of the vehicle, **in that**, in particular, a side of the vehicle on the inside of the bend is lowered to a greater extent than side on the outside of the bend.

10. Control unit for carrying out the method according to one of the preceding claims and for the level control of a vehicle, having a software at least
a) for processing a signal of a stability control system, or
b) for comparing limiting values with sensor values, or
c) for comparing limiting values with values derived from sensor values.

11. System for the level control of a vehicle, having an electronic control unit and means for raising and lowering the level, **characterized in that** the level can be lowered during travel as soon as at least one of the following conditions a), b) is satisfied:
a) at least one stability control system of the vehicle, of a towing vehicle or of a hitched vehicle is active,
b) values of parameters which permit conclusions about the driving stability are acquired at least in the vehicle, in a towing vehicle or in a hitched vehicle, by means of sensors, wherein at least one acquired value or at least one value which is calculated from acquired values exceeds a limiting value,
c) and the system is configured in such a way that
when a plurality of vehicles are connected to one another, for example a semi-trailer tractor with a semi-trailer or another vehicle combination composed of two vehicles or what is referred to as a road train with a plurality of vehicles, the vehicle whose level is controlled is a vehicle other than the vehicle for which at least one of the conditions a), b) is to be satisfied.

## Revendications

1. Procédé de régulation de niveau d'un véhicule, **caractérisé en ce que** le niveau est abaissé pendant le déplacement dès qu'au moins l'une des conditions a) et b) suivantes est remplie :
a) au moins une régulation de stabilité du véhicule, d'un véhicule tracteur ou d'un véhicule remorqué est active,
b) des valeurs de paramètres sont détectées au moins dans le véhicule, dans un véhicule tracteur ou dans un véhicule tracté, par des capteurs qui permettent de tirer des conclusions quant à la stabilité de conduite, dans lequel au moins une valeur détectée ou au moins une valeur calculée à partir de valeurs détectées dépasse une valeur limite,
c) dans lequel, dans le cas où plusieurs véhicules sont reliés entre eux, comme un tracteur avec semi-remorque ou une autre combinaison constituée de deux véhicules ou un système dit de train routier comportant plusieurs véhicules, le véhicule dont le niveau est régulé est autre que le véhicule pour lequel ladite au moins des conditions a), b) doit être remplie.

2. Procédé selon la revendication 1, **caractérisé en ce que** le véhicule doté d'une régulation de stabilité délivre un signal pour détecter la régulation de stabilité active, et **en ce que** le véhicule doté d'une régulation de niveau évalue le signal et, dans le cas où la régulation de stabilité est active, abaisse le niveau.

3. Procédé selon la revendication 2, **caractérisé en ce que** le signal de reconnaissance du fait que la régulation de stabilité est active est un message CAN, en particulier un état de la fonction "VDC Active".

4. Procédé selon la revendication 1 ou l'une des autres revendications, **caractérisé en ce qu'**une valeur d'accélération latérale est détectée dans au moins un véhicule, et **en ce que** ladite valeur ou une valeur dérivée desdites valeurs est comparée à une valeur limite.

5. Procédé selon la revendication 1 ou l'une des autres revendications, **caractérisé en ce que** des valeurs de capteurs de vitesse de roue sont détectées dans au moins un véhicule, et **en ce qu'**au moins l'une des valeurs ou au moins une valeur dérivée desdites valeurs est comparée à une valeur limite.

6. Procédé selon la revendication 1 ou l'une des autres revendications, **caractérisé en ce qu'**une valeur d'au moins une charge d'essieu est détectée dans au moins un véhicule et **en ce que** ladite valeur ou une valeur dérivée desdites valeurs est comparée à une valeur limite.

7. Procédé selon la revendication 1 ou l'une des autres revendications, **caractérisé en ce que** le niveau du véhicule n'est abaissé que d'une fraction de l'abaissement possible.

8. Procédé selon la revendication 1 ou l'une des autres revendications, **caractérisé en ce qu'**une partie avant du véhicule est abaissée à une hauteur différente d'une partie arrière du véhicule.

9. Procédé selon la revendication 1 ou l'une des autres revendications, **caractérisé en ce qu'**un côté du véhicule est abaissé plus fortement que l'autre côté du véhicule, en particulier **en ce qu'**un côté du véhicule situé à l'intérieur du virage est abaissé plus fortement qu'un côté extérieur au virage.

10. Appareil de commande destiné à mettre en oeuvre le procédé selon l'une des revendications précédentes et à réguler le niveau d'un véhicule, équipé d'un logiciel destiné au moins
a) à traiter un signal provenant d'une régulation de stabilité ; ou
b) à comparer des valeurs limites à des valeurs de capteurs ; ou
c) à comparer des valeurs limites à des valeurs dérivées des valeurs de capteurs.

11. Système de régulation de niveau d'un véhicule, comprenant un appareil de commande électronique et des moyens pour élever et abaisser le niveau, **caractérisé en ce que** le niveau peut être abaissé pendant le déplacement dès qu'au moins l'une des conditions suivantes a), b) est remplie :
a) au moins une régulation de stabilité du véhicule, d'un véhicule tracteur ou d'un véhicule remorqué est active,
b) des valeurs de paramètres sont détectées au moins dans le véhicule, dans un véhicule tracteur ou dans un véhicule tracté, par des capteurs qui permettent de tirer des conclusions quant à la stabilité de conduite, dans lequel au moins une valeur détectée ou au moins une valeur calculée à partir de valeurs détectées dépasse une valeur limite,
c) et le système est conçu de telle sorte que, dans le cas où plusieurs véhicules sont reliés entre eux, comme un tracteur avec semi-remorque ou une autre combinaison constituée de deux véhicules ou un système dit de train routier comportant plusieurs véhicules, le véhicule dont le niveau est régulé est autre que le véhicule pour lequel ladite au moins des conditions a), b) doit être remplie.
